Europäisches Patentamt

European Patent Office

Office européen des brevets

(19)

(11) Publication number: 0 368 274
A2

(12) EUROPEAN PATENT APPLICATION

(21) Application number: 89120688.0

(22) Date of filing: 08.11.89

(51) Int. Cl.5: B29C 61/06, B29C 67/14

(30) Priority: 11.11.88 JP 285296/88
07.03.89 JP 53016/89
12.06.89 JP 146593/89
13.06.89 JP 150292/89

(43) Date of publication of application:
16.05.90 Bulletin 90/20

(84) Designated Contracting States:
BE DE FR GB IT NL SE

(71) Applicant: NIPPON ZEON CO., LTD.
6-1, Marunouchi 2-chome
Chiyoda-ku Tokyo 100(JP)

(72) Inventor: Suzuki, Shoji
4135, Akuwa-cho Seya-ku
Yokohama-shi Kanagawa-ken(JP)
Inventor: Yamato, Motoyuki
Ooiso Koma Haitsu 2-232 2-21, Koma
Ooiso-cho Naka-gun Kanagawa(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Structural material and its application.

(57) Memory-shaped molded objects which can be deformed by application of heat and/or force and then restored to their original condition by heating above their restoration or memory temperature. The molded objects can have on at least a portion of their surface a resilient layer made from an elastomeric material and an adhesive affixing said objects to structural members for the purpose of retaining, connecting, or sealing.

EP 0 368 274 A2

## STRUCTURAL MATERIAL AND ITS APPLICATION

### Background of Invention

Various structural materials exist for glazing gaskets for automobiles, aircraft, ships, electrical appliance instruments, and buildings; joint gaskets; door-sealing materials; and coupling parts for pipes and boards. However, these materials are not easy to use and do not have sufficient mechanical strength to be used as structural materials. For example, there are two conventional kinds of window-frame sealing materials: an amorphous material and a fixed-shape sealing material. The amorphous sealing material requires an injection or casting process; thus, it requires some time to apply and its strength is not high enough. On the contrary, the fixed-shape sealing material is preshaped according to the application and has superior strength, but it is not easy to work with and cannot be installed in narrow spaces. In short, the fixed-shape sealing material has restrictions as far as its applicability is concerned. In both cases, the material is very difficult to remove once it has been installed.

Shape-memory alloys that utilize austenite phase-martensite phase transformation are well-known as shape-memory materials, but there has also been a development of new polymer shape-memory materials recently.

The term "shape-memory materials" generally refers to materials which remember any desired shape which is given to them. They are deformed at low temperatures, but at high temperatures they recover their original shape. Therefore, a molded object of a certain shape can be plastically deformed into a molded object of another shape and fixed in that shape by cooling, but it can be returned to the original shape by heating it. If a polymer material has this property, it can be used in a shape-memory molded object.

Shape memory polymers, which return to their original shape after heating, can be used for pipe connections, for sealing materials for building, for caulking, and the like, as disclosed in Japanese Patent Disclosure Kokai Sho 59-53528 and Kokai Sho 60-28433. The conventional shape memory polymers are elastomers having a comparatively low glass transition point. Such elastomers have insufficient mechanical strength and are not suited for the applications mentioned above, i.e., for sealing materials and connecting structural parts.

Applications of shape-memory polymer materials have been thought of in other fields, such as materials for joining pipes with different diameters, fastening materials for locking pins, medical fasteners for plaster casts, toy parts, automobile bumpers, portable containers, writing materials, sealing materials, inner and outer laminating materials for pipes and rod-shaped objects, and the like.

Thus, polymer materials raise great expectations as shape-memory molding materials since they are easy to mold and can be molecularly designed. Most of the shape-memory polymer materials known up until now, however, are elastomers or have low glass transition temperatures, such as polynorbornene or thermoplastic elastomers and high-styrene resins, etc. Since they have insufficient heat resistance and mechanical strength, however, there is the problem that they cannot be used effectively in fields requiring heat resistance or in applications in which they would be used as structural materials, such as joint parts or fixed sealing materials, etc. Moreover, molded objects of thermosetting resins, such as epoxy resins, urethane resins, unsaturated polyester resins, etc., also have the ability to remember shapes, but if they are subjected to secondary molding or deformation to a desired shape, i.e., secondary forming, after they have undergone primary molding in a certain shape, it is difficult to deform them in their plastic state so that it is necessary to do the work at high temperatures, at the heat deformation temperature or above, and even in this case there is insufficient flexibility so that breakage or cracking can occur easily, depending on the degree of deformation.

It has been reported that the specific polymers of styrene-butadiene-styrene block copolymers and trans-polyisoprene high-styrene resins also have the properties of polymers with shape memories.

Polymer materials for shape-memory molded objects require ease of working and excellent mechanical strength, as well as a good ability to recover their shapes repeatedly, rapid recovery speeds, and freedom from collapse of shape. However, no polymer materials for shape-memory molded objects have been proposed up until now which have these excellent properties.

Moreover, if a material can be molded primarily in a certain form and then easily molded or deformed secondarily, then standard types of molded articles can be produced in large quantities and adjusted to specific shapes by secondary molding or deformation, which would be very useful with respect to making the molding process more expedient. However, no polymer materials or methods for manufacturing molded objects have been proposed so far which can be used suitably in such applications.

U.S. Patent 4,831,094 is directed to articles having shape recovering property and to the method of using such articles. Such articles are made in a solid state having a first shape obtained as a result of compression molding, deforming the articles in a solid state to a second shape, cooling the article to a first temperature which is at or below glass transition temperature thereof to retain or stabilize the article in the second shape, and heating the article to above the first temperature to recover to the first shape. This patent discloses that materials suitable for such articles are selected from amorphous and semi-crystalline homopolymers and copolymers of norbornene and its alkylated, alkoxylated imides and carboxylic acid derivatives. as well as polymers containing dimethanooctahydronaphthalene in polymerized form. Glass transition temperature of such materials is from -90°C to +90°C.

Up until now, polynorbornene has been known as an example of a polymer shape-memory material. polynorbornene becomes rubbery by absorbing a large amount of oil, but it is unlike rubbers in general in that its glass transition temperature is comparatively high, 35°C, and its average molecular weight is also high, about 3,000,000. Therefore, it has the property that it does not easily relax stresses at room temperature but it returns to its original form at high temperatures. Therefore, a molded polynorbornene article made into a certain shape at a temperature near 150°C, for example, holds a deformed shape of any desired kind at room temperature but returns to its original shape at approximately 40°C or higher.

## Brief Description of Invention

This invention pertains to a multipurpose structural material and its application. The material has improved ease of use, mechanical strength, and it can be used to retain, connect or seal other parts. This invention also concerns a material composed of a polynorbornene resin which is insoluble in a solvent and has shape recovering or memory property. This invention also pertains to a method for manufacturing deformed or secondary molded objects from shape recovering or memory materials.

## Brief Description of Drawings

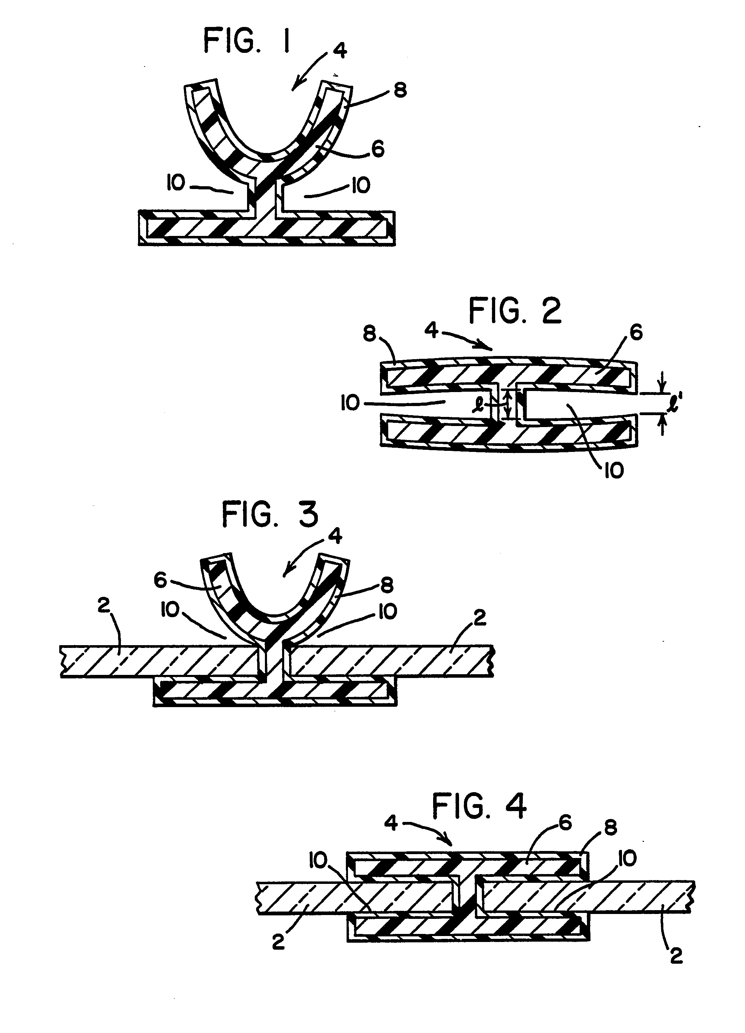

Figures 1-4 illustrate an H-shaped member in first and second shapes composed of a substrate and a surface layer, the substrate is made of a shape recovering or memory polymeric material whereas the surface layer is made of an elastomeric material which can deform with the substrate and which can be resilient. The legs of the H-shaped member are adapted to hold two edges of plates or like articles. One pair of legs of the H-member is shown deformed to a second shape which is retained and stabilized in that deformed shape by cooling the member to a first temperature at or below glass transition temperature of the substrate material. To recover the first or the molded shape of the member, it is heated to a temperature above the first temperature;

Figures 5 to 8 illustrate a U-shaped member which is adapted to hold one edge of a plate or a like article. The connecting portion of the U-shaped member can be rounded or at right angles to the member legs;

Figures 9 and 10 show a U-shaped member which can have an adhesive on its outside surfaces and which is used as a seal between a pair or more of spaced parts;

Figure 11 is a variation of the embodiment illustrated in Figures 9 and 10 wherein an edge of a plate is disposed between the legs of the U-shaped member which, in turn, is disposed and seals the space between a pair of spaced parts;

Figures 12 and 13 show members in collapsed and expanded tubular condition;

Figures 14 and 15 show members in collapsed and expanded tubular condition disposed between a pair of spaced parts, which have rounded section or groove wherein the tubular member is disposed upon being expanded to its original molded condition;

Figures 16 and 17 illustrate tubular or circular sleeves which can be used to connect externally a pair of pipes of equal or unequal outside diameter.

## Objects of Invention

This invention was developed after considering the above facts and its objective is to provide a multipurpose structural material which is easy to use, has high mechanical strength, is compatible with other parts, and which can be used for retaining, connecting, and sealing structural parts and the like.

Also, this invention provides a material for shape-memory molded objects which have shape recovering property and which is composed of a polynorbornene resin that is insoluble in a solvent and has a glass transition temperature of 60°C or higher.

This invention also provides a method for manufacturing molded objects which is characterized in that a primary molded article, composed of a polynorbornene resin that is insoluble in a solvent and has a glass transition temperature of 60°C or higher, is molded by bulk polymerization in a mold and is subjected to an external force to perform secondary molding or deformation.

Furthermore, this invention provides shape-memory molded objects and secondary molded objects using the aforementioned material.

## Summary of Invention

To achieve such objectives in this invention, a thermally workable structural material is composed of a substrate which is a shape-memory thermosetting resin that returns to its original shape by heating to above its recovery point or restoration temperature, so that the material can be processed with improved workability and then returned to the original shape. Optionally, the substrate can have a polymer surface layer which is bonded or coated onto at least part of the substrate. The bonded or coated surface layer changes its shape according to the shape of the substrate and is thus deformable with the deformation of the substrate.

The application method for the structural material of this invention is characterized by placing the material at a given location for a specific application, heating the structural material to above its recovery point or restoration temperature, and then allowing it to return to its original shape, in such a way as to hold, connect, or seal other parts.

## Detailed Description of Invention

The structural material of the invention consists of a substrate made of a shape memory thermosetting resin and optionally, a polymer surface layer that is bonded or coated onto at least part of the substrate and conforms to the deformation of the substrate.

For the substrate, any shape memory thermosetting resin can be used. Examples of such memory thermosetting resins include polyurethanes, epoxies, polyesters, nylons, and polymers obtained by ring-opening polymerization of a norbornene-type monomer, preferably tricyclic and tetracyclic norbornene-type monomers.

When the substrate is prepared from a ring-opening polymerization of norbornene monomer, the preferred monomer is a polycyclic norbornene monomer with at least 3 rings, such as dicyclopentadiene, tricyclopentadiene, and tetracyclododecene. By using monomers with at least 3 rings, a polymer with a high thermal deformation temperature will be obtained.

When a substrate is prepared from a ring-opening polymer from norbornene monomer, the polymer must be a thermosetting type. To achieve this purpose, at least 10 percent by weight, and preferably more than 30 percent by weight, of the monomer must be a crosslinkable monomer.

The crosslinkable monomer is a polycyclic norbornene monomer with at least two reactive double bonds. Specific examples of such monomers are dicyclopentadiene, tricyclopentadiene, and tetracyclopentadiene. Therefore, when the norbornene monomer and the crosslinkable monomer are the same substance, it is not necessary to use another crosslinkable monomer.

The preferred thermosetting polymer of this invention has a glass transition temperature (Tg) of greater than 60°C, preferably 100-250°C, and it must have sufficient strength so that it will not rupture during processing and working the original shape after manufacture. optionally, an antioxidant, a plasticizer, a filler, a pigment, a dye, an impact modifier, and other additives may be added to the thermosetting resin.

Such polynorbornene resins can be obtained by bulk ring-opening polymerization of at least one norbornene monomer in a mold which includes molding frames in the presence of a metathesis or ring-opening catalyst. Such resins are insoluble in solvents which means that the resin does not dissolve when immersed in toluene at 25°C for 24 hours.

Specific examples of the monomers which can be used as raw materials for the polynorbornene resin of this invention are polycyclic norbornene monomers with 3 or more rings. By selecting monomers which have 3 or more rings, it is possible to obtain polymers with high heat deformation temperatures. However, one may also use bicyclic norbornene-type monomers, since they can yield polymers with glass transition temperatures of 60°C or higher.

As norbornene monomers, one can use bicyclic norbornene monomers such as norbornene and norbornadiene; tricyclic compounds such as dicyclopentadiene and dihydrodicyclopentadiene; four-ring compounds such as tetracyclododecene; five-ring compounds such as tricyclopentadiene; seven-ring compounds such as tetracyclopentadiene; alkyl substituted forms of these compounds selected, for example, from methyl, ethyl, propel, or butyl substituents; alkylidene substituted forms selected, for example, from ethylidene substituents; aryl substituted forms selected, for example, from phenyl and tolyl substituents; and the like. Generally speaking, the norbornene monomers suitable herein are any monomer that contains at least one norbornene group.

These norbornene monomers can be used individually or in mixtures of two or more.

Moreover, one can also use monocyclic cycloolefins such as cyclobutene, cyclopentene, cyclopentadiene, cyclooctene, cyclododecene, and the like, which can undergo ring-opening polymerization with one or more of the aforementioned norbornene monomers, in amounts that do not hinder the objectives of this invention.

The catalyst for the bulk ring-opening polymerization may be any metathesis catalyst system which can be used as a bulk polymerization catalyst for norbornene monomers, such as disclosed by Japanese Patent Disclosure Kokai Nos. 58-127728, 58-129013, 59-51911, 60-79035, 60-186511, and 61-126115.

As a suitable metathesis catalyst, one can use halides, oxyhalides, oxides, or organic ammonium salts of tungsten, molybdenum, tantalum, etc.

As activating agents or cocatalysts, one can use alkyl aluminum halides, alkoxyalkyl aluminum halides, aryloxyalkyl aluminum halides, organotin compounds, and the like.

The metathesis or ring opening catalysts are ordinarily used in the range of approximately 0.01-50 millimoles, preferably 0.1-10 millimoles, with respect to one mole of the norbornene monomer. The activating agent or cocatalyst is ordinarily used in the molar range of 0.1-200, preferably 2-10 with respect to the catalyst ingredient.

It is preferable to use both the catalyst and the activating agent by dissolving them in a norbornene monomer, but they may also be suspended or dissolved in a small quantity of solvent, as long as it is in a range which does not essentially interfere with the properties of the product.

The polynorbornene resin used in this invention can be obtained by performing a bulk ring-opening polymerization of the norbornene monomer in the presence of the metathesis catalyst system in a mold (molding frame). Essentially, any bulk polymerization can be used, but it is desirable not to use an inert solvent, even in preparing the catalyst, due to the requirements for properties of the molded articles.

In a preferred method for manufacturing molded objects, the norbornene monomer is divided in half and put into separate containers. The metathesis catalyst is added to one and the activating agent to the other, producing two stable reaction solutions. These two reaction solutions are mixed and then injected into a mold of the desired shape, after which, bulk ring-opening polymerization is performed in the mold, preferably at an elevated temperature.

The pressure under which the liquids are injected into the mold is not especially limited: 10 kg/cm² or less is ordinarily sufficient, and it is preferable to perform the operation under atmospheric pressure. The mold temperature is ordinarily 30°C or higher, preferably 40-200°C, and more preferably 50-130°C. The mold pressure is ordinarily in the range of 0.1-100 kg/cm². The polymerization time may be selected as may be suitable, but it is ordinarily from 2 minutes to about 1 hour.

The ingredients used in the polymerization reaction should be stored and manipulated under an inert gas atmosphere, such as nitrogen gas, before these operations are performed. The mold may be sealed by an inert gas, but it need not be.

By reinforcing the polynorbornene resin with a fiber reinforcing material, the strength of the molded object can be increased and, when a shape-memory molded object is made, the repeated recoverability of the shape can be further improved.

As fiber reinforcing materials, glass or carbon fibers, and the like are used. By using them in the form of long fibers, a sufficient reinforcing effect is obtained. As long fibers, one can use strands, rovings, roving cloth, cloth and mats. Moreover, fiber reinforcing materials can also be surface treated with silane coupling materials, as is the present practice in this industry.

The fiber reinforcing material may be placed in the mold beforehand, and the reaction solution containing the monomer can be added afterward to perform the polymerization reaction. The amount

5

charged can be selected suitably, from a small quantity to a large quantity, as desired.

Various kinds of additives can be compounded with the polynorbornene resin such as antioxidants, fillers, elastomers, coloring agents, polymer modifiers, flame retardants, and lubricating agents, in order to modify the properties of the molded objects.

As antioxidants, one can use phenol, phosphorus, or amine, antioxidants which are generally used with plastics and rubbers. These antioxidants can be used individually or in combinations. The proportion in which they are combined is at least 0.5% by weight and preferably 1-3% by weight, based on the weight of the norbornene monomer(s). The antioxidant may be copolymerized with the monomer, specific examples of which are norbornenyl phenol compounds such as 5-(3,5-di-t-butyl-4-hydroxybenzyl)-2-norbornene, and the like, disclosed in Japanese Patent Disclosure Kokai No. 57-83522.

As the fillers, inorganic fillers such as glass, carbon black, talc, calcium carbonate, mica, and the like can be used.

By including elastomers, the impact resistance and flexibility can be improved. As elastomers, one can use polybutadiene, styrene-butadiene copolymer, styrene-butadiene-styrene block copolymer, polyisoprene, styrene-isoprene-styrene block copolymer, ethylene-propylene-diene terpolymer, and the like.

The additives can be mixed with either one or both of the reaction solutions before they are used.

The shape-memory molded objects of this invention can be manufactured by obtaining a primary molded object by performing bulk ring-opening polymerization of the norbornene monomer in a mold (mold form) in the presence of a metathesis catalyst system, and then performing secondary molding or deformation to the desired shape by applying an external force. In a preferred embodiment, the molded objects are usually deformed or shaped to the desired shape by applying an external force at a temperature above the glass transition or distortion temperature, and fixed in the deformed shape of the secondary molded object by cooling thereafter.

The secondary molding method may be a method in which an external force is applied at a temperature above or below the heat distortion temperature of the polymer to produce the deformation, after which it is cooled and fixed in the deformed shape, as in the case of other shape-memory materials. The secondary molding method or deformation may also be a method in which the deformation is produced by applying mechanical force without heating. In particular, the latter method is only made possible by the fact that polynorbornene resins have much better ductility than other thermosetting resins. By applying this method, productivity is improved since heating and cooling periods are not needed, and molding of objects which are difficult to deform during secondary molding at high temperatures can be performed easily. This approach is particularly suitable when a tube-widening object thicker than the tube diameter is driven into a tube-shaped primary molded object to widen its diameter because the tube can be damaged at high temperature.

The means for heating when the deformation is produced under heating may be any suitable one; the heating may be performed by oven, hot blaster, air heating by heat gun, steam heating, heating in a heated liquid, heating by electric heating tube or electric heating ribbon, heating by burying an object which heats by electricity in the norbornene resin, and passing a current through it, as in induction heating. As means for cooling, any suitable means such as air or water cooling may be employed.

This deformed secondary molded object can be easily returned to its original shape, i.e., the shape of the primary molded object, by heating it to the restoration temperature, which is a temperature at or below glass transition temperature, generally 10°C above the heat distortion temperature and preferably 30°C above it. This restoration temperature can be determined easily by preliminary testing of various materials.

The heating time varies with the size of the molded article, the degree of deformation, heating temperature, and the like, but it is ordinarily from several seconds to several tens of minutes, preferably approximately 1-20 minutes.

As the method for heating to the restoration temperature, one can use, for example, the method of heating the molded article in the deformed state in an oven, the method of heating with a hot air gun, and the like. If the heat deformation temperature is lower than 100°C, the original shape can be restored by immersing the deformed molded article in hot water or by blowing on it.

The shape-memory molded objects of the present invention have excellent heat resistance and mechanical strength, extremely good ability to repeatedly recover their original shape, and a rapid recovery speed. The shape recovery is further improved when the molded objects are reinforced by fiber reinforcing material. Molded objects that employ thermosetting polynorbornene resin as the material present no breakdown of shape. Therefore, retaining, connecting or sealing of parts or between parts is easily possible if molded objects deformed to a shape that facilitates processing are returned to the original shape by again heating after processing.

The shape-memory molded objects of this invention can be employed in many fields such as for pipe connecting materials (fittings), sealing materials, fastening materials for construction, gap-preventing agents for residential partitions where caulks might be used, and for structural materials such as automobile bumpers.

Molded objects from polynorbornene resins have applications as secondary molded objects as well as shape-memory molded objects.

Specifically, molded objects obtained by secondary molding or deformation of primary molded articles can be used as molded articles which do not require shape-memory properties. Such molded objects can be molded out of polynorbornene resins with glass transition temperatures exceeding 60°C first by primary molding by bulk polymerization in molds and then by secondary molding or deformation by application of external forces.

Rationalization of production can be achieved, for example, by making it unnecessary to use many complex molds, since molded objects of standard types can be produced in large quantity and adjusted to the desired shape by secondary molding. Even molded objects of complex shapes that are difficult to produce in molds can be produced easily by producing primary molded objects of a simple shape in molds beforehand and by secondary molding or deformation thereafter. Specific examples of such molded objects include corrugated sheets, boxes, trays, or through-shaped constructions obtained by deforming flat sheets, L-shaped rods or U-shaped rods obtained by deforming rods, etc.

As mentioned above, polynorbornene resins, having excellent ductilities, can be secondarily molded or deformed by applying external forces mechanically at room temperature. However, when the degree of deformation in secondary molding is high, it is desirable, from the point of view of preventing breakage or cracking, to perform the deformation in a state in which deformation is performed at a temperature higher than the heat distortion or deformation temperature.

The invention will now be described by reference to Figures 1 to 17, herein, which describe the invention in terms of specific applications thereof.

Figures 1-4 show the use of the structural material of the invention as a sealing material 4, which retains the two edges of the plates, 2 and 2. The plates may be glass panes, various boards, metal plates, or other plate materials.

The sealing material 4 of the invention, shown in Figure 2, has an H-shape memory and it consists of a shape memory thermosetting resin substrate 6, and an elastic polymer surface layer 8, formed over the entire periphery of the substrate.

As shown in Figure 2, the substrate has memory of an H-shaped figure, and the width 1 at the crosspiece of the H figure is smaller than 1' at the tips of the H figure. This increases the gripping force for the edges of plates 2 and 2.

An external force is applied to substrate 6 and surface layer 8 of sealing material 4 of a temperature above the thermal deformation temperature of substrate 6, as shown in Figure 1, to open up the crevices 10 wide enough so as to provide easy access.

Therefore, the edges of plates 2 can be easily inserted into crevices 10, as shown in Figure 3, of sealing material 4 shown in Figure 1. Subsequently, substrate 6 is heated to above its recovery temperature, i.e., the temperature where it returns to its original shape without any external force, and which is generally slightly higher than that of the thermal deformation temperature and as shown in Figure 2, returns to its original shape; crevices 10 close up and the edges of plates 2 become tightly fastened. Surface layer 8 is pressed onto the edges of plates 2, and the gap between substrate 6 and plates 2 is tightly sealed.

In heating of the substrate, any suitable heating method can be used, such as a blaster, heat gun, etc. Sealing material 4 can be heated directly or indirectly.

Sealing material 4 of the invention can be easily used and substrate 6, which is made of a thermosetting resin, has improved mechanical strength. In addition, when the surface layer has the proper elasticity, sealing is improved by pressing surface layer 8 onto the edges of the plates 2. Even if plates 2 tends to deform due to temperature variation, rain, or wind, the surface layer will absorb the slight dislocations, and further deformation and damage will be prevented. Also surface layer 8 will absorb any slight dimensional changes which might occur from shrinkage during the manufacturing process, installation, or punching of plate 2. Therefore, it is very easy to use.

Moreover, this invention is not limited to the practical embodiment shown in Figures 1-4; modifications may be made within the scope of this invention.

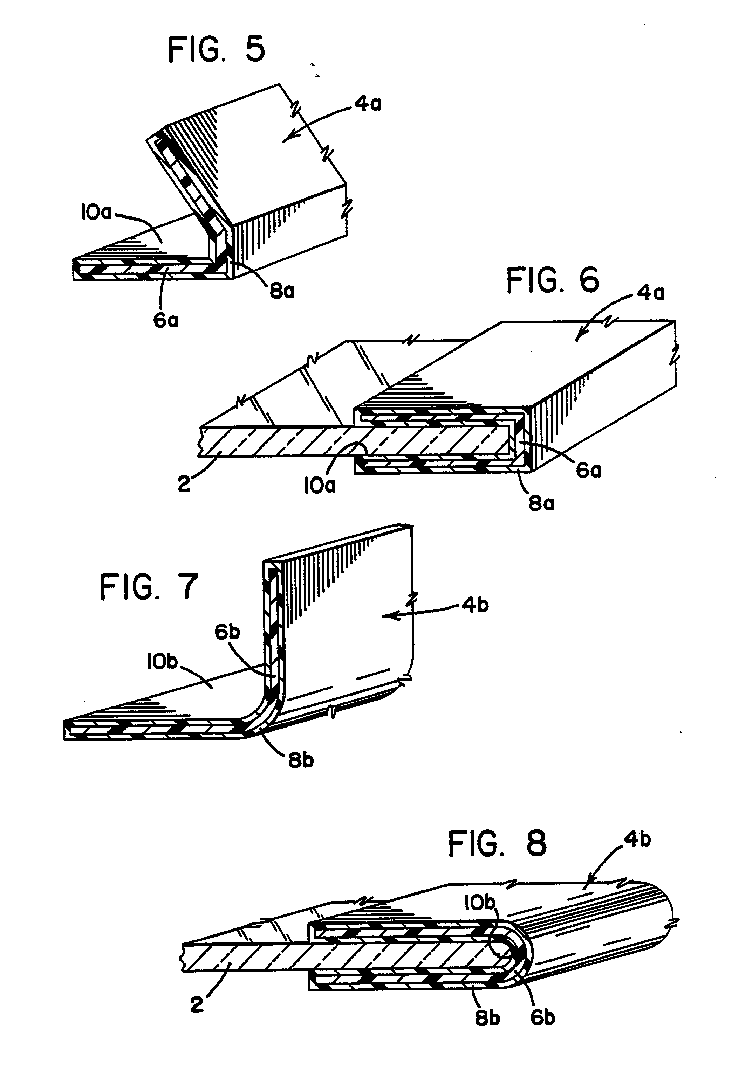

Other embodiments of the sealing material of the invention, 4a and 4b, have substrates 6a and 6b with the cross sections shown in Figures 6 and 8, of square and rounded U-shape, respectively. Surface layers 8a and 8b may be formed in advance at their outer periphery and the respective receive, 10a and 10b, can be opened up into the shapes shown in figs. 5 and 7 to provide easy access for working. In Figures 5 and 7, the embodiments show the sealing of only one plate 2, but they have a similar action as the embodiment shown in Figures 1-4. In these figures, the surface layer was formed over the entire perimeter of the substrate, but a similar sealing effect can be obtained by forming it only on one side of 10a and 10b. Also, the shape of the surface layer can be modified as needed. For example, a surface layer may be formed only on the area which contracts another part.

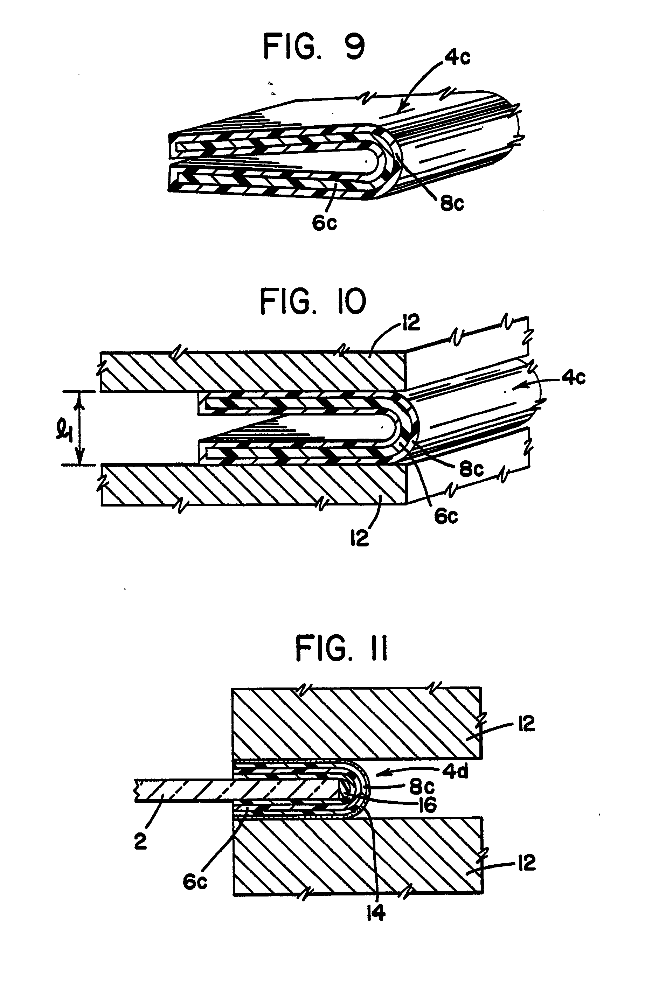

Figures 9 and 10 show another practical embodiment of the invention. In this example, the sealing material 4c of the invention has a shape memory as shown in Figure 10. It has a U-shaped cross section that is opened wider than the gap $1_1$ between the parts, 12 and 12. But when it is applied, it has the collapsed shape as shown in Figure 9.

In this example, a sealing material 4c can be easily inserted into the gap between the two parts 12 and 12, and upon heating, it will return to original shape of substrate 6c. Then surface layer 8c will press bond the two parts 12 and 12 and seal the gap between them.

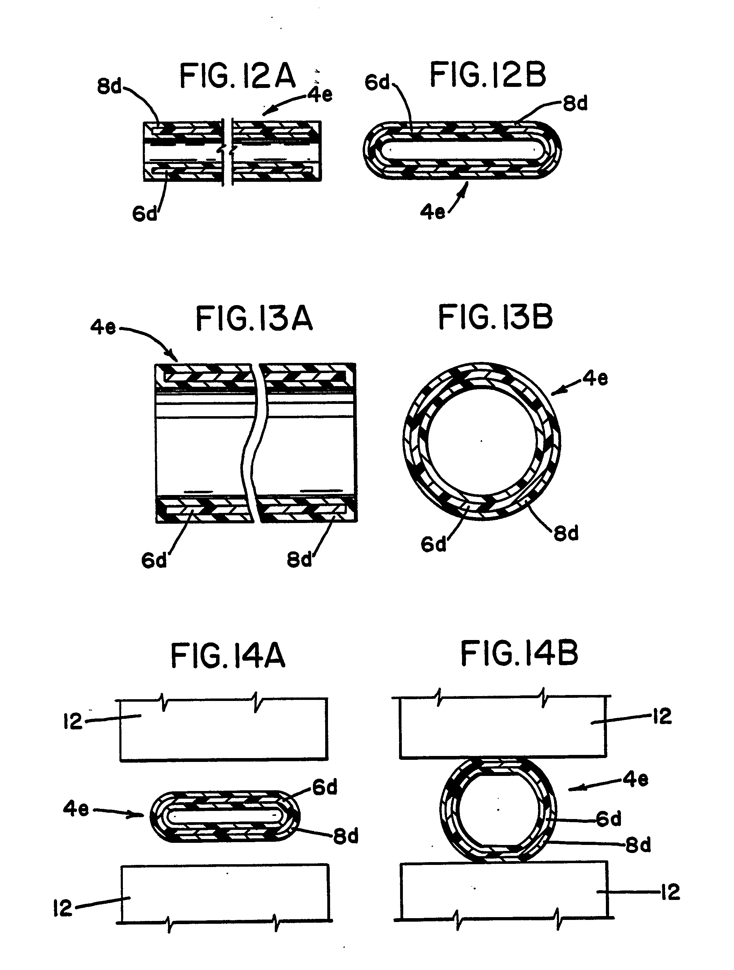

Figure 11 illustrates another practical embodiment of the invention. In this example, the sealing material 4d of the invention has a precoated layer of a hot melt type adhesive 14 on the outer periphery of surface layer 8c, as shown in the figures. Additionally, amorphous filling material 16 is placed in the gap between the edge of plate 2 and sealing material 4d. Examples of such amorphous sealing material 16 are silicones, modified silicones, polysulfides, acrylic urethanes, polyurethanes, acrylic resins, SBR, butyl rubber, etc.

In the heating process for shape recovery of sealing material 4d, the hot melt type adhesive will melt, and surface layer 8c of the outer periphery will bond to each part 12 and 12, which is very convenient.

A hot melt type adhesive can be precoated onto parts 12 and 12 instead of onto the surface layer 8C. Optionally, it can be coated onto both the surface layer and the parts. It is possible to coat a heat-setting adhesive, a room-temperature setting adhesive, or an amorphous sealing material to improve the sealing effect.

In Figures 12-15, another embodiment of the invention is illustrated. In the figures depicting sealing material 4e, the substrate 6d has a cylindrical memory shape as shown in Figure 13. During application, as shown in Figure 12, substrate 6d and surface layer 8d are retained in a flattened shape.

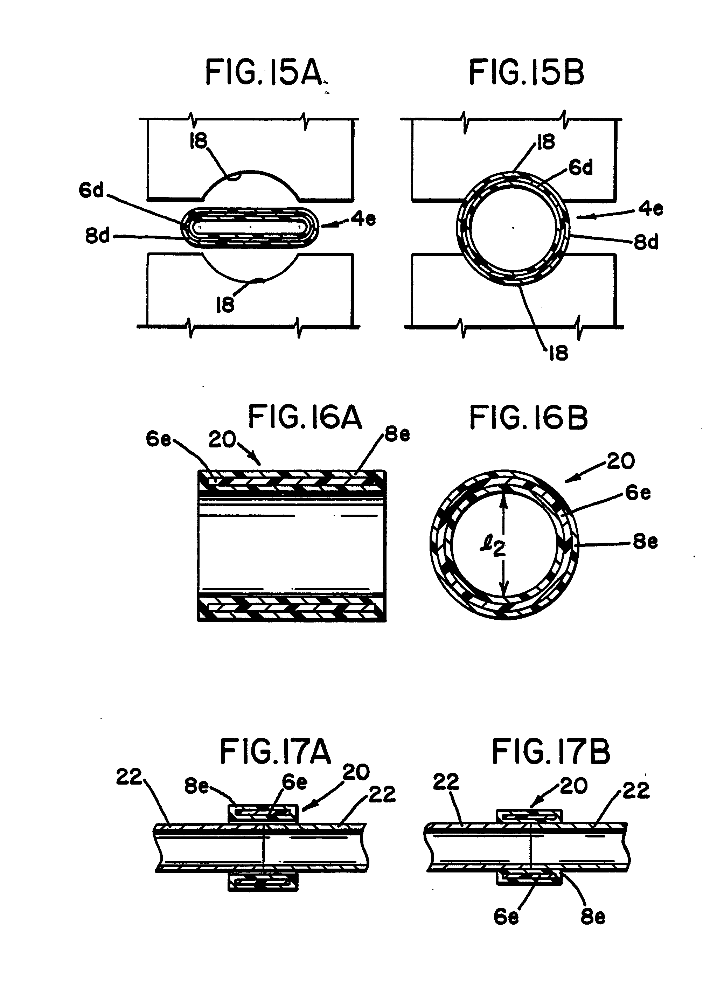

This sealing material 4e can be easily inserted between two parts 12 and 12, as shown in Figure 14(A) and then, upon heating, substrate 6d will recover its original shape as shown in Figure 14(B), so that surface layer 8d will be firmly press bonded onto parts 12 and 12, to achieve a tight sealing. also, it functions in a similar manner when parts 12 and 12, have a sealing groove 18, as shown in Figures 15(A) and 15(B).

In Figures 16 and 17, the application of the structural material of the invention as a coupling material 20 is illustrated.

The illustrated coupling material 20 is a cylindrical substrate 6e and the surface layer 8e has been formed on the entire periphery of the substrate. The inside diameter, $1_2$, has a smaller diameter memory, but the diameter will expand during its application.

By the use of coupling material 20, pipes 22 and 22 can be fitted together, as shown in Figure 17(A), by simply inserting them into coupling material 20, and then a butt joint will be formed. Subsequently, if this is heated to above the recovery temperature of substrate 6e, to recover its original shape as shown in Figure 17(B), this will bring about an airtight connection.

Conventionally, the pipe material is polyethylene, which is a polyolefin, but no excellent adhesive is available for bonding polyolefins. In this invention, a polyolefin fusion bondable material (namely, low melting polyethylene) was used as the surface layer. Then, the portion of the surface layer was fused and bonded onto a portion of the pipes. The two parts formed an airtight fusion bonding and this was achieved while thermally recovering the original shape. This is an example of hot melt fusion.

The surface layer on the substrate or the thermoplastic resin is optional. The substrate can be used with or without a surface layer.

Any polymer can be used for the surface layer of the structural material of the invention as long as it has a certain degree of elasticity so that it conforms to the shape change of the substrate during heating to above its recovery temperature to return to its original memory shape and can deform with the substrate. Specific examples include crosslinkable polymers of elastomers such as natural rubbers, polybutadiene rubber, styrene-butadiene rubber, acrylonitrile-butadiene rubber, hydrogenated acrylonitrile-butadiene rubber, butyl rubber, chloroprene rubber, ethylene-propylene rubber, ethylene-1-butene rubber, ethylene-propylene-diene terpolymer rubber, acrylic rubber, epichlorohydrin rubber, silicone rubber, Thiokol rubber, and chlorosulfonated rubber; thermoplastic elastomers such as styrene-butadiene block copolymer, styrene-isoprene block ccpolymer, styrene-isoprene-styrene block copolymer, styrene-butadiene-styrene block copolymer, styrene-isoprene-styrene-isoprene-styrene block copolymer, their hydrogenated products, and mixtures of partially crosslinked ethylene-propylene rubber or ethylene-propylene-diene terpolymer rubber and polyethylene or polypropylene; semirigid or hard thermoplastics such as polyethylene, polypropylene, polybutylene, polyvinyl chloride. Polystyrene, acrylonitrile-butadiene-styrene copolymer, ethylene-vinyl acetate copolymer, and polyurethane and their foamed materials. Also, any mixture with a given ratio of these materials can be used.

When the previously mentioned polymeric material has been used for the substrate, the surface layer may contain the usual additives, such as carbon black, zinc oxide, calcium carbonate, and/or plasticizer.

The substrate can be entirely covered by the surface layer but it may also be bonded only on one side of the substrate or on both sides. As desired, a portion of the surface can be shaped. The surface of the layer can be flat or irregular.

This invention will now be explained in further detail by giving practical and comparative examples below, but it is not limited by these practical examples. Furthermore, unless otherwise noted, parts and percentages herein are based on weight.

Practical Example 1

A surface layer 8, having the cross section of Figure 2, was prepared from ethylene-propylene rubber with a hardness of 85 (Mitsui EPT 4070, Mitsui Petrochemical Industries) and the inside was washed well with toluene and dried with nitrogen. By using this surface layer 8 as a mold, a prepared reaction mixture was cast in the cavity of surface layer 8, the volume was expanded approximately 2% or more, and then allowed to set by heating to 60° C. An exothermic reaction took place after about 2 minutes and polymerization was conducted for about 1 hour.

After the setting of the reaction mixture, its volume shrunk but this was compensated for by the extra volume during the casting process and no gap was observed between the substrate and the surface layer.

The reaction mixture consisted of a 1:1 mixture of solution A and solution B. The monomer solution consisted of 70% dicyclopentadiene and 30% cyclopentadiene trimer (approximately 80% asymmetric trimer and approximately 20% symmetric trimer).

| Solution A: | |
|---|---|
| Monomer | |
| Phenolic antioxidant (Irganox 259 Ciba-Geigy) | 2% |
| Diethylaluminum chloride | 40 mmol conc. |
| n-Propanol | 44 mmol conc. |
| Silicon tetrachloride | 20 mmol conc. |
| Solution B: | |
| Monomer | |
| Tri(tridecyl) ammonium molybdate | 10 mmol conc. |

The cured product had glass transition temperature of 160° C, Rockwell hardness of 113 on the R scale, and a flexural modulus of elasticity of 20,000 kg/cm$^2$.

The substrate with such a rubber surface layer was heated to 180° C, deformed to an easy-to-use form as shown in Figure 1, and then it was cooled in cold water to prepare a sealing material.

A part was inserted in this sealing material and heated with a hot gun to 200° C to allow it to recover its original shape. It was confirmed that the part was well sealed.

Practical Example 2

NBR Rubber of hardness 60 (DN 206, Nippon Zeon Co.) was used as the surface layer material and hard urethane (Quinate 999, Nippon Zeon Co.) as the substrate were used and polymerized in a manner similar to practical example 1 to obtain a preform of original shape consisting of a substrate and a surface layer. The polymerization time of the urethane was about 5 minutes. The cured product had thermal deformation temperature of 85° C, Shore D hardness of 80, and flexural modulus of elasticity of 26,000 kg/cm$^2$.

The preform was heated to 110° C to shape it into the shape shown in Figure 1 and then it was cooled to obtain the structural material of this invention. A part was inserted into the structural material and then the combination was heated to above 110°C to return the substrate to its original memory shape. It was confirmed that the parts were sealed securely.

## Practical Example 3

A substrate having a remembered shape of U-shaped cross-section, as shown in Figure 8, was prepared similar to that of practical example 1, from a ring-opening polymer using a norbornene monomer system. The periphery was coated with EPDM rubber as the surface layer and the composite was heated to 200°C to form an easy-to use shape shown in Figure 7. It was then cooled to room temperature to form a sealing material 4b. A hot melt type adhesive (HM-325, Cemedine Co.) was coated onto the surface of crevice 10b and fused by heating at 180°C to provide an approximately 30 μm-thick adhesive layer in a short processing time.

The edge of an aluminum plate was placed in the crevice of this sealing material and the sealing material was heated to about 200°C to allow it to return to the original shape of the substrate. During the heating process, the hot melt adhesive fused between the surface layer and the plate and these were thermally bonded tightly.

## Practical Example 4

A sealing material with a U-shaped cross section, as shown in Figure 10, was prepared with materials similar to those used in practical example 2 and shaped to the collapsed configuration shown in Figure 9 while heating to 120°C. It was then cooled to room temperature. A urethane sealing material (L6500, Sony Chemical Co.) was coated onto the outer periphery of the surface in a thickness of approximately 50 μm to prepare a sealing material. This sealing material was inserted between aluminum parts 12 and 12, and the sealing material was heated to about 120°C to allow the material to return to its original substrate shape. It ultimately expanded in the gap between parts 12 and 12, and sealed the gap. During this process, the urethane base sealing material adhered tightly onto both parts and the surface layer, and an excellent bonding was achieved.

In carrying out the shape recovery test, flat sheet molded pieces measuring 20 mm long, 100 mm wide, 3 mm thick obtained by molding the resin were heated for 30 minutes at a temperature approximately 30°C higher than the heat deformation temperature of the respective resin using an oven as the heating means. A small gouge was placed in the bent part at a location of approximately 50 mm in the center of the 100 mm width. The part was bent 180°, immediately placed in water and the deformed shape fixed by cooling (secondary molding).

The secondary molded samples were maintained for 15 minutes at the same temperature as during the aforementioned secondary molding, and recovery of their shape was observed.

The above procedure was repeated 10 times using samples with good shape recovery and the recovery property was examined. A shape recovery test was also conducted by preparing 5 flat sheet molded pieces from each resin.

## Practical Example 5

Solutions A and B of the following compositions that employed dicyclopentadiene (DCP) as the monomer component were used mixed in a ratio of 1:1 as the crude reaction solution.

Solution A:

(1) Monomer
(2) 2% phenolic antioxidant (Irganox 1010, made by Ciba Geigy)

(3) 40 mmol concentration of diethyl aluminum chloride
(4) 44 mmol concentration of n-propanol
(5) 20 mmol concentration of silicon tetrachloride

Solution B:

(1) Monomer
(2) 10 mmol of tri(tridecyl)ammonium molybdate

Solutions A and B were fed by the respective gear pumps to a power or impingement mixer so that their volumetric ratio was 1:1. They were then rapidly injected into a mold heated to 70° C having a space volume of 20 mm × 100 mm × 3 mm. The injection time was approximately 10 seconds and reaction was conducted for 3 minutes in the mold. This series of operations was conducted in a nitrogen atmosphere.

The glass transition temperature or heat deformation temperature of the flat molded objects obtained and the results of the shape recovery test are shown in Table I.

## Practical Example 6

Flat molded objects were obtained in the same way as in practical example 5 except that a mixed monomer of 85% DCP and 15% cyclopentadiene trimer (3-C) (mixture of approximately 80% symmetric form and approximately 20% asymmetric form) was used as the monomer component and 5% styrene-isoprene-styrene block copolymer (SIS) (Kraton 1170, made by Shell) was used as the elastomer in relation to the monomer component. The molded objects were evaluated in the same way.

## Practical Example 7

Flat molded objects were obtained in the same way as in practical example 5 except that a mixed monomer of 50% DCP and 50% 5-ethylidene-2-norbornene (ENB) was used as the monomer and 5% dissolved SIS was used as the elastomer in relation to the monomer component. The molded objects were evaluated in the same way.

## Practical Example 8

Flat molded objects were obtained in the same way as in practical example 5 except that a mixed monomer of 70% DCP and 30% methyl tetracyclododecene (MTD) was used as the monomer component and 5% dissolved SIS was used as the elastomer in relation to the monomer component. The molded objects were evaluated in the same way.

## Practical Example 9

Flat molded objects were obtained in the same way as in practical example 5 except that MTD was used as the monomer component. They were evaluated in the same way.

## Comparative Example 1

A liquid mixture of the following composition was obtained and injected into a mold having a space volume of 20 mm x 100 mm × 3 mm. Flat molded objects made of epoxy resin were produced by setting for 24 hours at 20° C, then for 3 hours at 80° C. The molded objects were evaluated in the same way as in practical example 5.

| Composition formula: | |
|---|---|
| Epicote 282 (*1) | 100 parts |
| Epomate B-002W (*2) | 50 parts |

(*1) Bisphenol A type liquid epoxy resin made by Shell.
(*2) Diamine hardening agent having a spiroacetal ring skeleton made by Shell, i.e.,
3,9-bis(3-aminopropyl)-2,4,8,10-tetraoxo-spiro-[5,5]-undecane.


## Comparative Example 2

Solutions A and B of the following formulas were prepared and mixed in a solution A/solution B mixture volumetric ratio of 4/6. The mixture was injected into a mold having a space volume of 20 mm x 100 mm c 3 mm and flat molded objects made of polyurethane were obtained by reacting for 2 hours at 60° C. They were evaluated in the same way as in practical example 5.

| Composition formula: | |
|---|---|
| Solution A: | |
| Isonol 93 (*1) | 60 parts |
| Plaksel 305 (*2) | 40 parts |
| Solution B: | |
| Mionate MTL-C (*3) | 100 parts |

(*1) Polyether polyol (trifunctional made by M.D. Kase).
(*2) Caprolactam-modified polyester polyol (bifunctional, made by Daicel Chemical Industries).
(*3) Diphenylmethane diisocyanate made by Nippon Polyurethane Kogyo


## Comparative Example 3

A liquid mixture of the following composition was obtained and injected into a mold having a space volume of 20 mm x 100 mm x 3 mm. Flat molded objects made of unsaturated polyester resin were produced by reacting for 5 hours at 20° C. They were evaluated in the same way as in practical example 5.

| Composition formula: | |
|---|---|
| ESTAR GA-10 (*1) | 100 parts |
| 55% methyl ethyl ketone peroxide | 1 part |
| 6% cobalt naphthenate | 0.5 part |

(*1) Unsaturated polyester made by Mitsui Toatsu Chemicals.

## Practical Example 10

Flat molded objects with a glass fiber content of 12% were obtained in the same way as in practical example 5, except that the reaction mixture was injected into a mold in which had previously been placed 1 sheet of chopped strand glass mat made from long glass fibers (made by Nippon Denki Glass). They were evaluated in the same way.

## Practical Example 11

Flat molded objects with a carbon cloth content of 10% were obtained in the same way as in practical example 10 except that three sheets of carbon cloth (made by Toray, tradename Toreka 6364) were used instead of the glass mat. They were evaluated in the same way.

Table I, below, summarizes the results of the aforementioned practical examples 5 to 11 and the comparative examples 1 to 3.

TABLE I

| | Sample | T g (°C) | Secondary molding temperature | Observation results | Bonding strength | Impact resistance - Izod |
|---|---|---|---|---|---|---|
| | | (HDT in °C) | | | (kg/mm²) | (kg·cm/cm) |
| Practical Example 5 | DCP<br><br>Homopolymer | 150<br><br>(140) | 170 | No abnormalities when recovery was performed 10 times for each of 5 samples | 8.5 | 7.5 |
| Practical Example 6 | DCP/3 - C = 85/15<br>Polymer | 160<br><br>(140) | 170 | Same | 7.7 | 25 |
| Practical Example 7 | DCP/KNB = 50/50<br>Polymer | 109<br><br>(90) | 120 | Same | 7.0 | 50 |
| Practical Example 8 | DCP/MTD = 70/30 | 165<br><br>(145) | 175 | Same | 7.8 | 27 |
| Practical Example 9 | MTD<br><br>Homopolymer | 190<br><br>(180) | 210 | Same | 8.5 | 7.0 |
| Comparative Example 1 | Epoxy resin | ( 73) | 120 | All 5 samples cracked first in secondary molding | 9.0 | 2> |
| Comparative Example 2 | Urethane resin | ( 92) | 120 | 2 samples cracked in first secondary molding, other 3 cracked the 5th time | 6.5 | 7.0 |
| Comparative Example 3 | unsaturated polyester resin | ( 80) | 120 | All 5 samples cracked the first time | 8.5 | 2> |
| Practical Example 10 | DCP + glass mat | (170) | 200 | No abnormalities in any of 5 samples with 10 repetitions | 10.5 | 50 |
| Practical Example 11 | DCP + carbon cloth | (170) | 200 | Same | 11.0 | 30 |

As is evident from Table I, the molded objects that employ polynorbornene resin have a high glass transition temperature, excellent heat resistance and are easily secondary molded or deformed. No abnormalities are seen even when rigorous testing consisting of bending 180° is repeated. The secondary molded objects recover rapidly to their original shape when reheated.

In contrast to this, molded objects of the comparative examples that used epoxy resin, urethane resin or unsaturated polyester resin cracked readily when deformed in secondary molding. They were not satisfactory as shape-memory molded objects.

Molded objects that used polynorbornene resin also had the same or better properties such as bending strength, impact resistance, etc., as other thermosetting resins.


Practical Example 12


Sealing materials with a cross-sectional shape were obtained by primary molding under the same conditions as in practical example 5. They were then deformed so that the opening was wider to facilitate the insertion of an inserted part by heating to 180° C. Sealing materials with a cross-sectional shape were obtained by water cooling in this condition.

The material recovered to the original shape and good holding of an inverted part was confirmed after the part had been inserted into this sealing material and it was heated to 200° C by hot gun.


Practical Example 13


Flat sheet measuring 20 mm x 100 mm x 3 mm obtained in practical example 6 was heated to 200° C, set on a press to deform it at a right angle in the center in the lengthwise direction. Secondary molded objects bent at a right angle in the center could be obtained easily as a result.

The present invention proposes a material for shape-memory molded objects that has excellent mechanical strength, good shape recovery, rapid recovery speed, and no breakdown of shape. The present invention also proposes shape-memory molded objects made of said material as well as a method of easily producing secondary molded objects deformed from primary molded objects using polynorbornene resin.

According to the structural material of this invention and its application method, the structural material consisting of a substrate and a surface layer is easily shaped to a workable form and, thus, it can be easily inserted into narrow openings and other parts can also be easily inserted into it. Its installation can be carried out quite conveniently.

With a subsequent heating of the substrate to above its recovery or memory temperature, the substrate returns to its original remembered shape and the surface layer conforms to this deformation. A tight bonding is established so as to retain or hold, connect, or seal other parts. The finishing process can be completed easily.

Moreover, the substrate is made of a thermosetting resin and it has excellent mechanical strength and can accommodate deformation caused by the installation and finishing processes. When the surface layer has a proper elasticity, it then establishes a tight contact and retains, couples, or seals other parts by contact bonding. Even if a part supported by the structural material of the invention deforms by an external force, the surface layer absorbs the minute dislocation, and it ultimately prevents large scale deformation and damage. Furthermore, it can accommodate dimensional changes due to any shrinkage associated with the processing of the surface layer, installation, or punching. This makes it easy to use. Moreover, the structural material of the invention can be formed by heating so that after installation, it is easy to deform it and replace the part.

In particular, when the surface layer of the structural material of this invention is coated with a hot-melt adhesive, the hot melt adhesive is used during the heating to recover or restore the original shape, and a thermal fusion bonding is achieved between the parts and the surface layer, which is an advantage.


Practical Example 14

Sealing material was obtained in the same way as in example 12, except that it was deformed at room temperature by application of external forces. The material recovered to the original shape and good holding of an inverted part was confirmed after the part had been inserted into this sealing material and it was heated to 200°C.

## Claims

1. Structural article comprising deformable material having a portion which is deformed from its original molded condition and a layer on at least a portion of said material and secured thereto, said heat-deformable material is made from shape memory thermosetting resin which returns to its original shape upon heating, said layer is made from a polymer that is deformable with said heat-deformable material.

2. Article of claim 1 wherein said deformable material is selected from polyurethanes, epoxy resins, polyesters, polyamides, polynorbornenes, and mixtures thereof; and said layer is selected from thermoplastic elastomers and thermoplastics.

3. Article of claim 1 wherein said deformable material is selected from polyurethanes, epoxy resins, polyesters, polyamides, polynorbornenes, and mixtures thereof; and said layer is selected from hot-melt adhesives.

4. Article of claim 1 wherein said layer is selected from elastomeric material.

5. Article of claim 1 wherein said deformable material is selected from polynorbornenes which do not dissolve when immersed in toluene at 25°C for 24 hours and which have glass transition temperature of at least 60°C.

6. Article of claim 5 wherein said deformable material has glass transition temperature in the range of about 100 to 250°C.

7. Article of claim 1 wherein said deformed portion can be restored to its original molded condition by heating.

8. Article of claim 5 wherein said deformed portion can be restored to its original molded condition by heating to a temperature above its memory temperature; said article also including fiber reinforcing material in its structure selected from glass fibers, carbon fibers, and mixtures thereof.

9. Article of claim 1 also including a coating of an adhesive on said layer.

10. Structural article comprising a shape-memory object made of a polynorbornene resin which does not dissolve when immersed in toluene at 25°C for 24 hours and which has glass transition temperature of at least 50°C.

11. Article of claim 10 wherein said resin has glass transition temperature in the range of 100 to 250°C.

12. Article of claim 10 including reinforcing material in said article.

13. Article of claim 10 including fiber reinforcing material in said article, said reinforcing material is selected from glass fibers, carbon fibers, and mixtures thereof.

14. Article of claim 10 having a portion thereof which is deformed from its original molded condition and which can be restored to its original molded condition by heating.

15. Article of claim 13 having a portion thereof which is deformed from its original molded condition and which can be restored to its original molded condition by heating.

16. Method for making molded object comprising the steps of molding a deformable material selected from shape memory thermosetting resins to its original molded condition, deforming at least a portion of said material from said original molded condition to a working condition, and restoring said deformed portion to its original molded condition.

17. Method of claim 16 wherein said material is selected from polyurethanes, epoxy resins, polyesters, polyamides, polynorbornenes, and mixtures thereof.

18. Method of claim 16 wherein said material is selected from polynorbornenes which do not dissolve when immersed in toluene at 25°C for 24 hours and which have glass transition temperature of at least 60°C.

19. Method of claim 18 wherein said material has glass transition temperature in the range of about 100 to 250°C.

20. Method of claim 16 wherein said step of deforming is carried out by application of physical force to said object.

21. Method of claim 16 wherein said step of deforming is carried out by application of physical force to said object without application of any heat.

22. Method of claim 16 wherein said step of molding said object also includes the steps of positioning a reinforcing material in a mold where said object is molded and flowing said thermosetting resin into said mold containing said reinforcing material whereby a reinforced object is formed.

23. Method of claim 22 wherein said reinforcing material is selected from glass fibers, carbon fibers, and mixtures thereof.

24. Method of claim 23 wherein said step of restoring said deformed portion to its original molded condition is carried out at a temperature about glass transition temperature of said polynorbornene.

25. Method of claim 24 including the step of applying a layer on at least a portion of said object, said layer is formed from a polymer that is deformable with said object or any portion thereof.

26. Method of claim 25 wherein said layer is selected from elastomeric material.

27. Method for making molded object comprising the steps of molding a deformable material selected from polynorbornene resins which are insoluble in a solvent and have glass transition temperature of at least 60°C and deforming at least a portion thereof by application of an external force.

28. Method of claim 27 wherein said resins contain polymerized dicyclopentadiene and have glass transition temperature in the range of about 100 to 250°C.

29. Method of claim 27 including the steps of positioning a reinforcing material in a mold where said object is molded and introducing said polynorbornene resin into said mold containing said reinforcing material whereby a reinforced object is formed.

30. Molded objects made by the method of claim 27.

FIG. 1

FIG. 2

FIG. 3

FIG. 4

FIG. 5

FIG. 6

FIG. 7

FIG. 8

FIG. 9

4c

8c

6c

FIG. 10

12

$\ell_1$

4c

8c

6c

12

FIG. 11

12

4d

8c

16

2

12

6c

14

FIG.12A   FIG.12B

FIG.13A   FIG.13B

FIG.14A   FIG.14B

# FIG.15A

# FIG.15B

# FIG.16A

# FIG.16B

# FIG.17A

# FIG.17B